# FASCICULE DE BREVET EUROPEEN

(11) **EP 2 564 450 B1**
(45) Date de publication et mention de la délivrance du brevet: **07.01.2015**
(21) Numéro de dépôt: 11716225.5
(22) Date de dépôt: 18.04.2011
(51) Int. Cl.: H01M 2/20, H01M 2/10, H01M 2/26, H01M 10/02, H01M 10/48

(54) **ENSEMBLE ACCUMULATEUR POUR BATTERIE DE VEHICULE ELECTRIQUE OU HYBRIDE MUNI D'UN SUPPORT DE CONNECTEUR DEFORMABLE.**
AKKUMULATORANORDNUNG FÜR EINE BATTERIE EINES ELEKTRO- ODER HYBRIDFAHRZEUGES MIT VERFORMBARER VERBINDERSTÜTZE
ACCUMULATOR ASSEMBLY FOR A BATTERY OF AN ELECTRIC OR HYBRID VEHICLE, PROVIDED WITH A DEFORMABLE CONNECTOR SUPPORT

(30) Priorité: 28.04.2010 FR 1053289
(43) Date de publication de la demande: 06.03.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: JOYE, Olivier, F-63040 Clermont-Ferrand Cedex 9 (FR); AUGUET, Thierry, F-63040 Clermont-Ferrand Cedex 9 (FR)
(86) Numéro de dépôt international: PCT/EP2011/056124
(87) Numéro de publication internationale: WO 2011/134818

(56) Documents cités:
- EP-A1- 2 131 414
- US-A1- 2006 105 603

## Description

La présente invention concerne le domaine des ensembles accumulateurs pour batterie de véhicule électrique ou hybride, notamment de véhicule automobile.

Par « véhicule électrique automobile », on entend un véhicule tel que défini dans le règlement N°100 des Nations Unies concernant l'homologation des véhicules électriques à batterie.

La présente invention concerne plus particulièrement un ensemble accumulateur comprenant une pluralité d'éléments accumulateurs d'énergie électrique comprenant chacun des électrodes de connexion et des moyens d'assemblage reliant lesdites électrodes. Une batterie est formée d'un ou plusieurs ensembles accumulateurs et constitue la source d'énergie électrique utilisée pour la motorisation du véhicule électrique ou hybride.

La demande de brevet EP-A1-2 131 414 décrit un dispositif de stockage d'énergie comportant un ensemble accumulateur formé d'une pluralité de cellules de stockage d'énergie disposées à l'intérieur d'une cuve, et un connecteur rapporté sur une paroi latérale de la cuve. Le connecteur comprend des moyens de connexion pour relier électriquement les cellules de l'ensemble accumulateur, une unité de contrôle du fonctionnement desdites cellules et une unité de connexion électrique reliée à l'unité de contrôle et comportant des tiges de contact électrique pour le branchement d'un composant complémentaire.

On connaît également, par le document US 2006/0105603, un connecteur comprenant une portion de connexion, une embase de support pourvue d'une tige de montage, et des ressorts montés autour desdites tiges et permettant à l'embase de supporter de manière élastique la portion de connexion. Ce document traite uniquement d'un connecteur comprenant une portion de connexion mobile par rapport à une embase de support.

On connaît encore, par la demande de brevet WO 2008/086212, un boîtier de réception d'un ensemble accumulateur comportant une pluralité d'éléments accumulateurs de forme cylindrique. L'ensemble accumulateur comprend des barres omnibus de connexion pour relier électriquement les électrodes de connexion des éléments accumulateurs. L'ensemble comprend également une platine supportant les barres omnibus et des connecteurs reliant des capteurs de mesure de tension à une unité de contrôle montée à l'extérieur du boîtier de réception.

Pour relier les connecteurs à l'unité de contrôle, il est nécessaire de prévoir des câbles cheminant à l'intérieur du boîtier de réception et s'étendant à l'extérieur de celui-ci. Ceci peut rendre complexe les opérations à réaliser lors du montage de l'ensemble accumulateur dans le boîtier de réception associé.

La présente invention a pour but de remédier à cet inconvénient.

Plus particulièrement, la présente invention vise à prévoir un ensemble accumulateur facile à fabriquer, à assembler et à monter à l'intérieur du boîtier de réception associé.

Dans un mode de réalisation, l'ensemble accumulateur comprend une pluralité d'éléments accumulateurs d'énergie électrique comprenant chacun des électrodes de connexion, des moyens d'assemblage reliant lesdites électrodes, un connecteur pour le branchement d'un composant extérieur à l'ensemble, et un support de connecteur comprenant une embase de montage portée par les moyens d'assemblage et une patte de fixation supportant le connecteur. La patte de fixation est conformée de manière à permettre un déplacement du connecteur relativement à l'embase de montage lors d'une sollicitation extérieure exercée sur ledit connecteur et/ou sur la patte de fixation.

Avantageusement, la patte de fixation est déformable élastiquement selon au moins une direction de manière à permettre le déplacement du connecteur par rapport à l'embase de montage.

La patte de fixation peut comprendre une partie de raccordement s'étendant à partir de l'embase de montage et une partie de fixation prolongeant ladite partie de raccordement et supportant le connecteur. La partie de raccordement peut comporter au moins une portion coudée. De préférence, au moins la partie de fixation s'étend transversalement par rapport à l'embase de montage. Le support de connecteur peut être réalisé monobloc.

Avantageusement, les éléments accumulateurs sont superposés selon un axe d'empilage, au moins la partie de fixation s'étendant le long de l'axe d'empilage.

Dans un mode de réalisation, les moyens d'assemblage comprennent des entretoises disposées axialement entre au moins certaines des électrodes de connexion des éléments accumulateurs, des tirants s'étendant axialement à travers des évidements des électrodes de connexion et des entretoises, et des flasques d'extrémité coopérant avec les tirants pour enserrer axialement les électrodes de connexion et les entretoises empilées.

Au moins une partie d'un des flasques d'extrémité ou une entretoise isolante électriquement peut former l'embase de montage. On dispose ainsi d'un ensemble comportant un nombre de pièces limité.

Les moyens d'assemblage peuvent comprendre des entretoises électriquement conductrices et des fiches de connexion montées chacune à l'intérieur d'un évidement de l'entretoise conductrice associée et reliées chacune à un câble électrique propre, les câbles électriques étant fixés au connecteur.

L'invention concerne également un bloc accumulateur comprenant un ensemble accumulateur tel que défini précédemment et un boîtier délimitant une chambre de réception dudit ensemble. Le boîtier comprend un carter principal et un carter secondaire présentant des bords périphériques d'assemblage et étant pourvus de moyens de liaison en position assemblée. Un desdits carters comprend un passage ou ouverture traversante ménagée dans une de ses parois et au travers de laquelle s'étend en saillie vers l'extérieur le connecteur.

La prévision d'une patte de fixation flexible permet de pouvoir déplacer le connecteur par rapport à l'embase de montage et aux éléments accumulateurs assemblés de manière à faciliter l'introduction du connecteur dans l'ouverture associée lors de l'assemblage des carters du boîtier. Ce déplacement du connecteur peut être obtenu sous l'effet d'une pression exercée sur la patte de fixation et/ou sur le connecteur lui-même. La disposition en saillie du connecteur à l'extérieur du boîtier permet de pouvoir brancher directement une carte de circuit imprimé formant unité de contrôle sans avoir à prévoir des câbles de connexion.

Par ailleurs, le support de connecteur est monté sur l'empilement d'éléments accumulateurs grâce aux moyens permettant d'assembler et de relier les différentes électrodes des éléments accumulateurs. Ceci évite la prévision de moyens de montage ou de fixation spécifiques pour le support de connecteur. Le support de connecteur est monté sur les moyens d'assemblage reliant les électrodes de connexion des éléments accumulateurs ou fait partie intégrante desdits moyens.

La présente invention sera mieux comprise à la lecture de la description détaillée de modes de réalisation pris à titre d'exemples nullement limitatifs et illustrés par les dessins annexés, sur lesquels :
- la figure 1 est une vue éclatée en perspective d'un ensemble accumulateur selon un exemple de réalisation de l'invention,
- la figure 2 est une vue assemblée en perspective de l'ensemble de la figure 1,
- les figures 3 et 4 sont des vues de détail de l'ensemble accumulateur dans la position assemblée,
- la figure 5 est une vue de détail d'un support de connecteur de l'ensemble accumulateur des figures 1 et 2,
- la figure 6 est une vue en perspective d'un boîtier à l'intérieur duquel est monté l'ensemble accumulateur des figures 1 et 2, et
- la figure 7 est une vue de détail d'un support de connecteur selon un second exemple de réalisation.

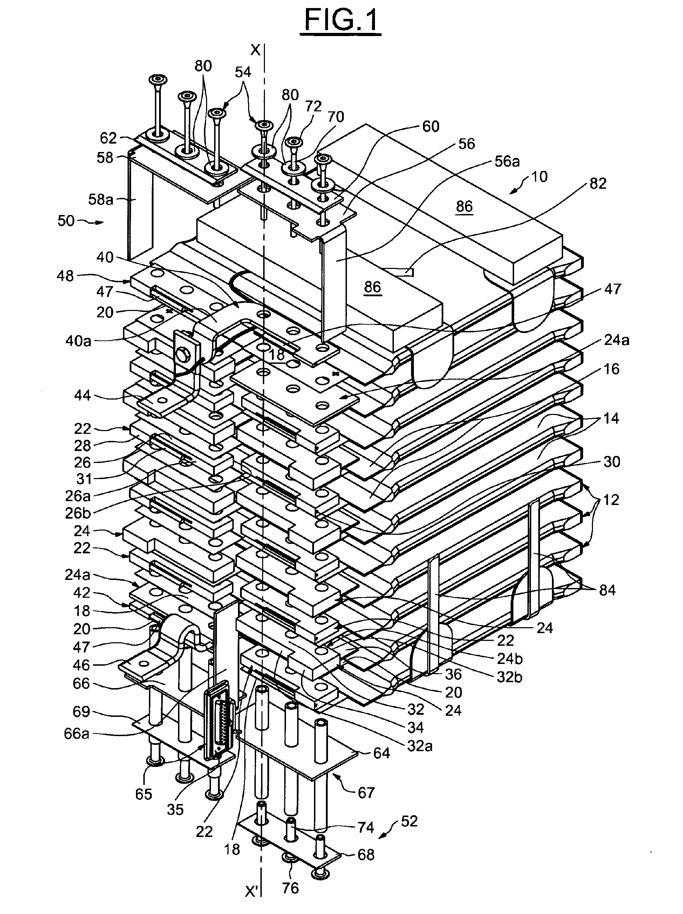

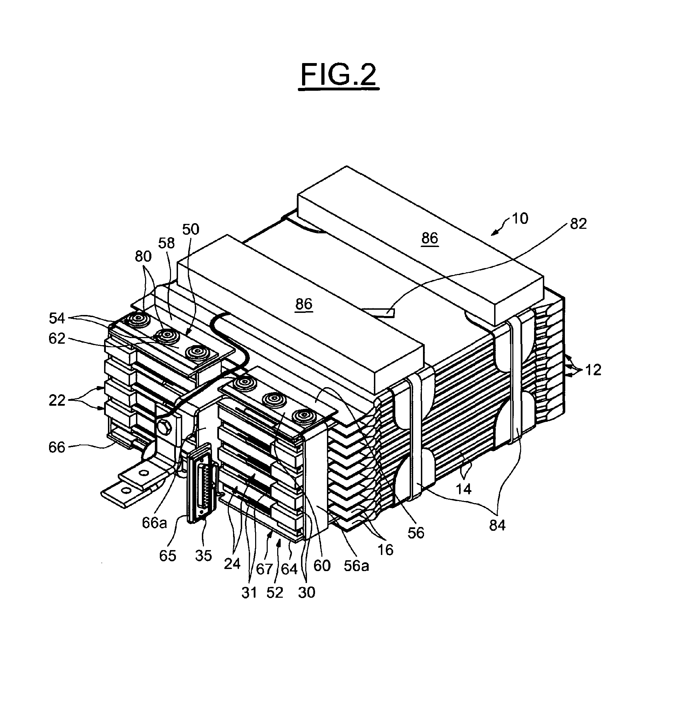

Sur les figures 1 et 2, on a représenté un exemple de réalisation d'un ensemble accumulateur 10 comprenant une pluralité de cellules ou éléments accumulateurs 12 d'énergie électrique superposés le long d'un axe X-X' d'empilage supposé vertical.

Les éléments accumulateurs 12 sont identiques entre eux et se présentent sous forme de plaques rectangulaires. Ils sont empilés axialement les uns relativement aux autres de manière à ce que les faces principales de deux éléments accumulateurs adjacents soient en regard. Dans l'exemple illustré, le nombre d'éléments accumulateurs 12 est égal à onze. Bien entendu, il est possible de prévoir un nombre différent d'éléments accumulateurs en fonction de l'énergie électrique à délivrer.

Chaque élément accumulateur 12 comporte une enveloppe 14 d'encapsulation extérieure à l'intérieur de laquelle sont disposées une cathode et une anode séparées par un électrolyte (non représentés). L'électrolyte peut être par exemple un électrolyte aprotique dans le cas d'un élément accumulateur du type lithium-ion ou encore un séparateur polymère à membrane dans le cas d'un élément accumulateur du type lithium-ion polymère.

L'enveloppe 14 d'encapsulation comporte une zone de fermeture 16 scellée d'épaisseur réduite comprenant un bord libre à partir duquel s'étendent transversalement par rapport à l'axe X-X' des électrodes 18 positive et 20 négative de connexion. Les électrodes 18, 20 de connexion sont espacées transversalement l'une par rapport à l'autre. Elles se présentent sous la forme de languettes et sont réalisées à partir de fines feuilles métalliques présentant une épaisseur inférieure à celles de la zone de fermeture 16.

Dans l'exemple de réalisation illustré, les éléments accumulateurs 12 d'énergie électrique sont agencés de manière à disposer alternativement les électrodes 18 positives et 20 négatives, en considérant l'axe X-X' d'empilage, de sorte que l'électrode positive, respectivement négative, d'un élément accumulateur soit axialement en regard et adjacent de l'électrode négative, respectivement positive, de l'élément accumulateur immédiatement adjacent situé au-dessous et/ou au-dessus.

Afin de relier les différents éléments accumulateurs 12, l'ensemble 10 comprend des entretoises 22 conductrices et des entretoises 24 isolantes disposées axialement entre les électrodes 18, 20 de connexion alignées axialement. Les entretoises 22 sont formées dans un matériau électriquement conducteur, par exemple en matière métallique telle que l'aluminium ou toute autre matière appropriée. Les entretoises 22 sont formées dans un matériau isolant, par exemple en matière synthétique ou toute autre matière appropriée.

Dans l'exemple de réalisation illustré, entre deux éléments accumulateurs 12 axialement adjacents sont disposées une entretoise 22 conductrice et une entretoise 24 isolante, à l'exception de l'élément accumulateur supérieur de l'empilement et de l'élément accumulateur inférieur adjacent. En effet, entre ces deux éléments, il est prévu seulement une entretoise isolante entre l'électrode 18 positive de l'élément accumulateur 12 supérieur et l'électrode 20 négative de l'élément inférieur adjacent, les deux autres électrodes 20, 18 de ces deux éléments étant directement en contact l'une contre l'autre.

Les entretoises 22 conductrices sont montées axialement entre l'électrode 18 positive d'un élément accumulateur et l'électrode 20 négative de l'élément accumulateur adjacent supérieur. Les entretoises isolantes 24 sont montées axialement entre l'électrode 20 négative d'un élément accumulateur et l'électrode 18 positive de l'élément accumulateur adjacent supérieur. Les entretoises 22 conductrices et 24 isolantes sont disposées alternativement le long de l'axe X-X'.

En considérant deux éléments accumulateurs 12 adjacents, l'entretoise conductrice 22 est montée en appui contre la face supérieure de l'électrode 18 positive de l'élément accumulateur inférieur et s'étend axialement jusqu'à venir en contact de la face inférieure de l'électrode 20 négative de l'élément accumulateur supérieur. Inversement, l'entretoise 24 isolante est disposée entre la face supérieure de l'électrode 20 négative de l'élément accumulateur inférieur et la face inférieure de l'électrode 18 positive de l'élément accumulateur supérieur en venant axialement en contact contre lesdites faces.

Dans l'exemple de réalisation illustré, les électrodes 18, 20 de connexion et les entretoises 22 conductrices et 24 isolantes sont disposées de manière à monter en série la pluralité d'éléments accumulateurs 12. En variante, il pourrait être possible de prévoir un montage en parallèle des éléments accumulateurs. Dans ce but, il conviendrait d'aligner respectivement les électrodes positives et négatives le long de l'axe d'empilage et de disposer les entretoises de façon appropriée.

Les entretoises 22 conductrices sont identiques entre elles et comportent chacune une base 26 se présentant sous forme de plaque rectangulaire et permettant de relier électriquement les électrodes 18, 20 de deux éléments accumulateurs 12 superposés axialement. Dans ce but, les surfaces inférieure et supérieure de la base 26 sont en contact respectivement contre les électrodes 18 positive et 20 négative de ces éléments accumulateurs 12. Une face avant 26a de la base 26, située du côté opposé aux éléments accumulateurs 12, est prolongée en partie par un talon 28. La base 26 et le talon 28 sont dimensionnés de manière à recouvrir la majeure partie des faces des électrodes 18, 20 associées en restant en retrait ou en affleurant avec les bords périphériques desdites électrodes. Une face arrière 26b de la base 26 reste à distance de la zone de fermeture 16 des éléments accumulateurs 12 associés.

Chaque entretoise 22 comporte un logement ou évidement 30 traversant ménagé dans le talon 28 et s'étendant transversalement à l'axe X-X' en étant parallèle à la face avant 26a de la base 26. L'évidement 30 de chaque entretoise 22 conductrice permet le montage d'une fiche de connexion montée à une extrémité d'un câble électrique 31. A chaque entretoise 22 est donc associé un câble électrique 31 comportant une fiche de connexion.

La fiche de connexion de chaque câble électrique 31 forme une fiche mâle apte à être montée à l'intérieur de l'évidement 30 associé formant prise femelle. Plus précisément, la fiche de connexion comporte une partie terminale conductrice venant se loger dans l'évidement 30 pour connecter électriquement le câble 31 et l'entretoise 22 conductrice associée. La partie terminale est avantageusement élastiquement déformable et peut être fixée sur l'entretoise 22 par coincement à l'intérieur de l'évidement 30. La fixation de la fiche de connexion sur l'entretoise 22 peut bien entendu être réalisée par tout autre moyen approprié, par exemple par sertissage, vissage, etc. La fiche de connexion peut avantageusement être du type fiche banane.

Chaque câble électrique 31 comporte également un fusible électrique de protection relié à la fiche de connexion. Le fusible peut être monté sur le câble électrique 31 de manière à être situé au voisinage immédiat de la fiche de connexion. Le fusible comprend une partie conductrice prévue pour fondre lorsque le courant passant à travers le câble électrique 31 est supérieur à un seuil prédéterminé. Le fusible peut par exemple être du type ultra-rapide FF selon la norme internationale CEI 60127.

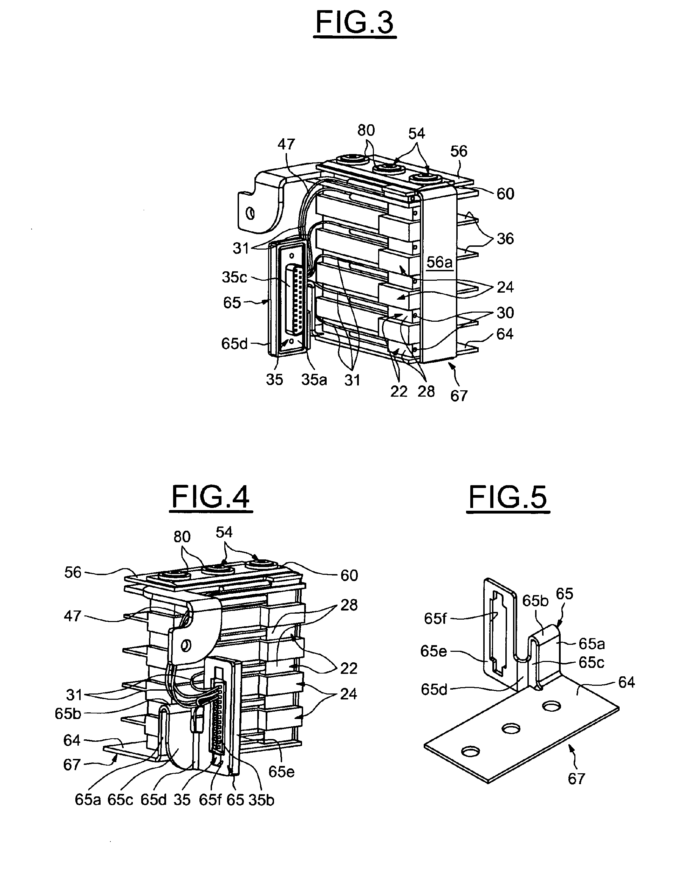

Comme illustré aux figures 3 et 4, à l'opposé de l'extrémité reliée à la fiche de connexion connectée à l'entretoise 22 associée, chaque câble électrique 31 est fixé à un connecteur 35 commun. Le connecteur 35 comprend un corps 35a de fixation, une première zone de connexion 35b mâle comportant des broches de contact pour fixer les câbles électriques 31, et une seconde zone de connexion 35c femelle opposée sur laquelle peut avantageusement être branchée directement une carte de circuit imprimé (non représentée) pour réaliser des mesures de tension. Les zones de connexion 35b, 35c s'étendent de part et d'autre du corps 35a et sont connectées électriquement. Le connecteur 35 peut par exemple être un connecteur SUB-D.

Comme cela sera décrit par la suite, le connecteur 35 est monté sur un support déformable de manière à faciliter son montage à l'intérieur d'un boîtier associé.

En se référant de nouveau aux figures 1 et 2, les entretoises 24 comportent des premier et second sous-groupes d'entretoises 24a, 24b isolantes. Les entretoises 24a isolantes sont identiques et se présentent sous forme de plaques rectangulaires d'épaisseur mince. Elles sont au nombre de deux. La surface inférieure de l'une de ces entretoises 24a est montée indirectement contre la face supérieure de l'électrode 20 négative de l'élément accumulateur 12 inférieur de l'empilement, comme cela sera décrit par la suite. La surface supérieure de cette entretoise est montée en contact contre la face inférieure de l'électrode 18 positive de l'élément accumulateur situé axialement au-dessus. L'entretoise 24 permet de réaliser une isolation électrique de ces deux électrodes. L'autre entretoise 24a vient en appui contre la face inférieure de l'électrode 18 positive de l'élément accumulateur 12 supérieur de l'empilement et la face supérieure de l'électrode 20 négative de l'élément accumulateur 12 situé axialement au-dessous.

Les entretoises 24b sont montées axialement entre l'électrode 20 négative d'un élément accumulateur et l'électrode 18 positive de l'élément accumulateur adjacent supérieur pour les éléments accumulateurs 12 disposés axialement entre les éléments accumulateurs inférieur et supérieur de l'empilement.

Les entretoises 24b sont identiques entre elles et comportent chacune une base 32 se présentant sous forme de plaque rectangulaire permettant d'isoler électriquement les électrodes 20, 18 des éléments accumulateurs 12 superposés axialement. La base 32 est dimensionnée de manière à recouvrir la majeure partie des faces des électrodes 20 et 18, une face avant 32a de ladite base affleurant sensiblement axialement avec le bord libre avant des électrodes. La face avant 32a de la base 32 est prolongée en partie par un talon 34 s'étendant en saillie par rapport au bord libre avant des électrodes, et plus généralement au-delà des entretoises 22 conductrices. Les talons 34 sont alignés axialement avec les talons 28 des entretoises 22 conductrices. Les talons 34 permettent de s'assurer de l'isolation électrique de l'ensemble 10 accumulateur par rapport au boîtier de l'ensemble accumulateur.

Chaque entretoise 24b comporte une extension 36 de faible épaisseur s'étendant à partir de la face arrière 32b de la base et prévue pour venir en appui contre l'une des zones de fermeture 16 des éléments accumulateurs associés à l'entretoise. Cette extension 36 permet d'éviter un contact entre les électrodes 20 négative et 18 positive à isoler de deux éléments accumulateurs adjacents, lors d'une éventuelle déformation de l'une ou de ces deux électrodes. En effet, les électrodes 18, 20 étant réalisées sous forme de fines feuilles métalliques, elles peuvent se plier légèrement et venir au contact de l'électrode axialement adjacente, ce qui peut créer un court-circuit. On accroît ainsi la sûreté de fonctionnement de l'ensemble 10 accumulateur.

La disposition du premier sous-groupe d'entretoises 24a relativement aux électrodes 18, 20 et aux enveloppes 14 des éléments accumulateurs 12 associés est similaire à celle qui vient d'être décrite pour le second sous-groupe d'entretoises 24b.

Afin de pouvoir connecter électriquement l'ensemble 10 à un consommateur d'énergie électrique, qui peut avantageusement être la motorisation électrique du véhicule, des attaches 40 supérieure et 42 inférieure sont prévues respectivement pour la fixation de câbles 44, 46 de puissance. L'attache 40 supérieure est montée en appui contre la face supérieure de l'électrode 18 positive de l'élément accumulateur supérieur de l'empilement. L'attache 42 inférieure est montée en contact de la face supérieure de l'électrode 20 négative de l'élément accumulateur inférieur dudit empilement et l'entretoise 24a correspondante. L'entretoise 24a est ainsi montée indirectement en contact contre ladite électrode 20 négative. Les attaches 40, 42 sont réalisées dans un matériau électriquement conducteur.

L'attache 42 inférieure présente une structure identique à celle des entretoises 22 conductrices en présentant toutefois une épaisseur réduite. Une extrémité du câble 46 de puissance est serrée axialement entre l'attache 42 et l'entretoise 24a correspondante. L'attache 40 supérieure présente également une structure proche des entretoises 22 et comporte en outre une extension 40a pour permettre la fixation du câble 44 de puissance.

De façon similaire aux entretoises 22 conductrices, les attaches 40, 42 comportent des évidements prévus pour le montage d'une fiche de connexion d'un câble électrique 47 qui est identique aux câbles 31. Du côté opposé à la fiche de connexion, les câbles électriques 47 sont fixés au connecteur 35 au niveau de la zone de connexion 35b. Ils permettent de réaliser une mesure de la tension totale aux bornes de l'ensemble 10 accumulateur. Cette mesure s'effectue entre l'électrode positive 18 de l'élément accumulateur supérieur et l'électrode négative 20 de l'élément accumulateur inférieur de l'empilement.

L'ensemble 10 comprend encore une plaque 48 de structure identique à celle des entretoises 22 conductrices et montée axialement en appui sur la face supérieure de l'électrode 20 négative de l'élément accumulateur 12 supérieur de l'empilement. Cette plaque 48 comporte un évidement prévu pour le montage d'une fiche de connexion d'un câble électrique 47. Du côté opposé à la fiche de connexion, le câble 47 est fixé au connecteur 35 afin de pouvoir réaliser une mesure de tension.

Pour assurer la fixation des électrodes 18, 20 des éléments accumulateurs relativement aux entretoises 22 conductrices et 24 isolantes, l'ensemble 10 comprend des flasques d'extrémité 50 supérieur, 52 inférieur et des tirants 54 d'assemblage coopérant avec les flasques d'extrémité pour enserrer axialement les entretoises et électrodes de connexion.

Le flasque d'extrémité 50 supérieur comporte une première plaque d'appui 56 montée axialement en contact contre la surface supérieure de l'attache 40 et prolongée perpendiculairement au niveau d'un bord latéral par une patte 56a s'étendant axialement vers le bas. La patte 56a présente une dimension axiale telle que, dans la position assemblée des éléments accumulateurs 12, son extrémité inférieure est située axialement au-dessous de l'électrode 18 positive de l'élément accumulateur inférieur de l'empilement, sensiblement au niveau du flasque d'extrémité 52 inférieur. La patte 56a s'étend au voisinage des électrodes 18, 20 et entretoises 22, 24 empilées axialement du côté extérieur de l'empilement, i.e. du côté opposé à l'autre empilage d'électrodes et d'entretoises. La patte 56a forme une protection ou barrière permettant de s'assurer de l'isolation électrique de l'ensemble 10 par rapport à son boîtier de réception associé.

Le flasque d'extrémité 50 comporte également une seconde plaque d'appui 58 venant axialement en contact contre la surface supérieure de la plaque 48, et des contre-plaques 60, 62 venant respectivement axialement en contact contre les surfaces supérieures des plaques d'appui 56, 58. Un bord latéral de la plaque d'appui 58 est prolongé par une patte 58a axiale symétrique à la patte 56a en considérant un plan médian axial des éléments accumulateurs 12. La patte 58a s'étend axialement vers le bas et son extrémité inférieure est située axialement au niveau du flasque d'extrémité 52 inférieur dans la position assemblée des éléments accumulateurs 12. Les plaques d'appui 56, 58 sont réalisées dans un matériau isolant et présentent une forme rectangulaire.

Le flasque d'extrémité 52 inférieur comporte des première et seconde plaques d'appui 64, 66 venant respectivement en contact contre les faces inférieures des électrodes positive 18 et négative 20 de l'élément accumulateur 12 inférieur de l'empilement. Les plaques d'appui 64, 66 sont réalisées dans un matériau isolant et présentent une forme rectangulaire.

La plaque d'appui 64 forme une embase de montage à partir de laquelle s'étend une patte 65 prévue pour la fixation du connecteur 35. La patte 65 s'étend à partir d'un bord avant de grand côté de l'embase 64 opposé aux éléments accumulateurs 12. La patte 65 est située sur l'embase 64 du côté de la plaque d'appui 66. La plaque d'appui ou embase 64 de montage et la patte 65 forment un support 67 de connecteur.

Comme illustré plus visiblement aux figures 3 à 5, la patte 65 comporte une première portion rectiligne 65a s'étendant à partir de l'embase 64 axialement vers le haut en direction de la plaque d'appui 56 du flasque d'extrémité supérieur. La dimension axiale de la portion rectiligne 65a correspond sensiblement à la dimension axiale de deux entretoises 22 conductrices et d'une entretoise 24 isolante empilées. La portion rectiligne 65a est située à distance des entretoises 22, 24 et des électrodes 18, 20 voisines. L'extrémité supérieure de la portion rectiligne 65a est prolongée par une portion coudée 65b recourbée vers le bas, elle-même prolongée par une seconde portion rectiligne 65c s'étendant axialement vers le bas et présentant une dimension sensiblement égale à la portion rectiligne 65a. La portion rectiligne 65c est espacée de la portion rectiligne 65a et située du côté opposé à l'embase 64.

Un bord latéral de la portion rectiligne 65c opposé à la plaque d'appui 66 (figures 1 et 2) est prolongé par une portion coudée 65d, elle-même prolongée par une partie de fixation 65e prévue pour le support du connecteur. Les portions rectilignes 65a, 65c et coudées 65b, 65d constituent une partie de raccordement s'étendant à partir de l'embase 64 qui est prolongée par la partie de fixation 65e. Les portions coudées 65b, 65d forment deux plis sur cette partie de raccordement. Dans l'exemple de réalisation illustré, la partie de fixation 65e présente une forme générale rectangulaire et est orientée de façon à ce que sa face principale s'étende transversalement à l'embase 64 et que ses bords de grand côté s'étendent le long de l'axe d'empilage de l'ensemble accumulateur. Un évidement traversant 65f est ménagé sur la partie de fixation 65e pour permettre le montage et la fixation du corps 35a du connecteur 35. Les zones de connexion 35b et 35c s'étendant de part et d'autre la partie de fixation 65e du support 67 de connecteur.

En se référant de nouveau aux figures 1 et 2, un bord latéral de la plaque d'appui 66 du flasque d'extrémité 52 est prolongé par une patte 66a axiale s'étendant vers le haut à travers l'espace transversal situé entre les deux empilages axiaux d'électrodes 18, 20 de connexion et des entretoises 22, 24. L'extrémité supérieure de la patte 66a axiale est située axialement au niveau de la plaque d'appui 58 du flasque d'extrémité 50 supérieur dans la position assemblée des éléments accumulateurs 12.

Le flasque d'extrémité 52 comporte également des contre-plaques 68, 69 venant respectivement en appui contre les surfaces inférieures des plaques d'appui 64, 66.

Les tirants 54 d'assemblage traversent axialement l'empilement d'électrodes 18, 20 et d'entretoises 22, 24 pour les enserrer axialement entre les flasques d'extrémité 50, 52. Pour permettre le montage des tirants 54 d'assemblage, les électrodes 18 et 20 de connexion, les entretoises 22 et 24, les attaches 40 et 42, la plaque 48, les plaques d'appui 56, 58, 64, 66 et les contre-plaques 60, 62, 68, 69 comportent des évidements traversants alignés axialement. Dans l'exemple de réalisation illustré, trois évidements sont prévus sur chacun de ces organes.

Les tirants 54 d'assemblage sont identiques entre eux et au nombre de six. Chaque tirant 54 comporte une partie mâle comportant une tige 70 filetée, s'étendant axialement et munie, à son extrémité supérieure, d'une tête 72 de serrage comportant un trou taraudé de manière à permettre l'insertion d'une clé en vue du vissage. Chaque tirant 54 comporte également une partie femelle comprenant une portion de montage 74 cylindrique munie intérieurement d'un filetage correspondant à celui de la tige 70. L'extrémité inférieure de la partie de montage 74 comporte une tête 76 d'appui venant en contact contre la contre-plaque 68, 69 correspondante du flasque d'extrémité 52 inférieur. Le vissage des tiges 70 filetées dans les portions de montage 74 permet aux flasques d'extrémité 50, 52 d'enserrer axialement les entretoises 22, 24 isolantes et les électrodes 18, 20 et d'obtenir un contact axial entre elles afin de réaliser la connexion électrique des éléments accumulateurs 12 empilés.

Des manchons 78 d'isolation sont prévus pour le montage des tiges 70 filetées et des portions de montage 74 à l'intérieur des évidements pratiqués sur les électrodes 18 et 20 de connexion, les entretoises 22 et 24, la plaque 48, les attaches 40 et 42, les plaques d'appui 56, 58, 64, 66 et les contre-plaques associées. Les manchons 78 d'isolation sont interposés entre les tirants 54 d'assemblage et ces évidements afin d'isoler électriquement les tirants. Dans ce but, les manchons 78 sont réalisés dans un matériau électriquement isolant, par exemple en silicone.

Afin de s'assurer du maintien du contact axial entre les électrodes 18, 20 des éléments accumulateurs et les entretoises 22 et 24, l'ensemble 10 comporte des moyens de précontrainte 80 élastiques disposés chacun autour d'une des tiges 70 des tirants 54 d'assemblage et montés axialement en contact de la tête 72 de serrage associée et de la contre-plaque 60, 62 correspondante du flasque d'extrémité 50. Les moyens de précontrainte 80 sont identiques entre eux et se présentent chacun sous la forme d'une rondelle annulaire à section rectangulaire à l'état libre. Les rondelles peuvent par exemple être des rondelles du type Belleville ou à plateau. Alternativement, il est possible d'utiliser tout autre moyen de précontrainte élastique à élasticité axiale apte à exercer un effort de précontrainte axiale.

Après serrage des tirants 54 d'assemblage, les moyens de précontrainte 80 sont aptes à exercer des efforts axiaux sur le flasque d'extrémité 50 supérieur de manière à appliquer une précontrainte axiale sur les électrodes 18, 20 des éléments accumulateurs et les entretoises 22, 24. On assure ainsi un jeu axial nul entre les deux empilages axiaux d'électrodes 18, 20 et d'entretoises de connexion garantissant une bonne connexion électrique des différents éléments accumulateurs 12. En outre, les moyens de précontrainte 80 permettent d'appliquer, entre les électrodes 18, 20 et les entretoises 22, 24, une pression de contact globalement uniforme au cours du temps.

L'ensemble 10 comprend encore avantageusement des sondes de mesure de la température des éléments accumulateurs 12. Une première sonde 82 est fixée sur la face supérieure de l'élément accumulateur supérieur de l'empilement, une seconde sonde pouvant être fixée sur un élément accumulateur situé par exemple à mi-hauteur de l'empilement. La fixation des sondes de mesure peut être réalisée par collage. Les sondes sont reliées au connecteur 35 par des câbles (non représentés) de façon à pouvoir réaliser un contrôle de la température de l'ensemble 10.

Afin d'isoler individuellement les éléments accumulateurs 12 les uns par rapport aux autres, une bande isolante (non représentée) est prévue sur les différents éléments accumulateurs 12. Pour maintenir fixement les éléments accumulateurs 12 les uns par rapport aux autres, des colliers 84 de serrage sont prévus autour de l'empilage d'éléments accumulateurs 12. Deux bandes 86 de mousse sont également collées sur la portion de bande isolante recouvrant la face supérieure de l'élément accumulateur 12 supérieur de l'empilement.

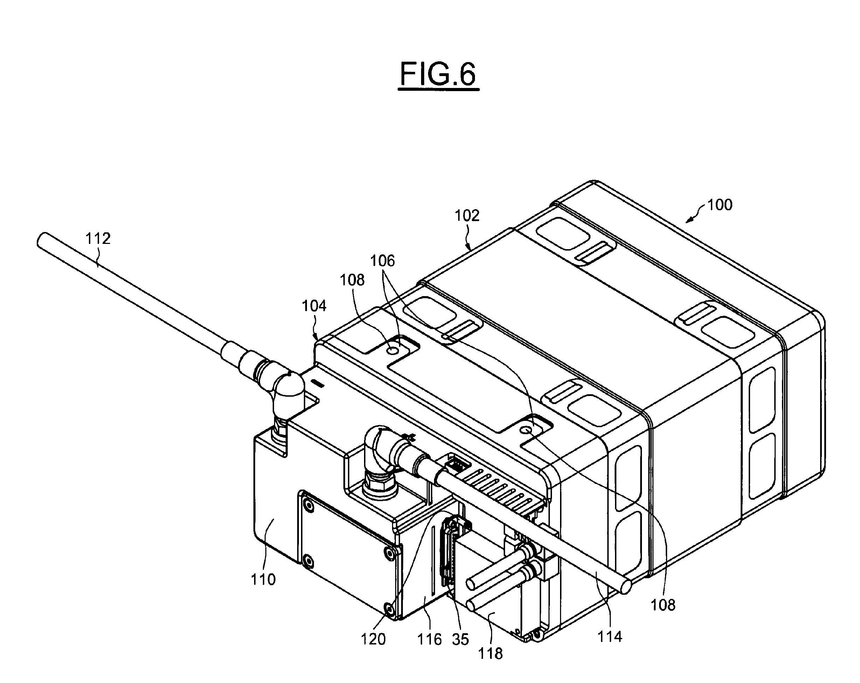

Après assemblage, l'ensemble accumulateur 10 peut être monté à l'intérieur du boîtier 100 associé illustré à la figure 6. Le boîtier 100 comporte principalement un carter principal 102 ouvert sur un côté et un carter secondaire 104 venant obturer ledit côté de manière à ce que le boîtier délimite une chambre de réception à l'intérieur de laquelle est monté l'ensemble accumulateur. Les éléments accumulateurs de l'ensemble sont supportés par le carter principal 102 de forme générale parallélépipédique, les électrodes de connexion desdits éléments s'étendant en saillie dudit carter et étant logées dans le carter secondaire 104.

Le carter secondaire 104 et le carter principal 102 présentent des bords périphériques d'assemblage de forme rectangulaire et accouplés l'un à l'autre en position assemblée du boîtier. Pour le maintien de cette position assemblée, le carter secondaire 104 comporte des languettes 106 de fixation extérieures, plates et espacées. Elles prolongent localement le bord périphérique d'assemblage dudit carter et coopèrent avec des bossages 108 extérieurs en saillie prévus sur le carter principal 102.

Le carter secondaire 104 comporte également un fond 110 opposé et parallèle à un fond du carter principal 102. Le carter secondaire 104 présente, vu de l'extérieur, une forme latérale en creux située d'un côté et définissant une paroi verticale 116 latérale qui est perpendiculaire au fond 110. Le carter secondaire 104 présente également des formes supérieures en creux, espacées horizontalement par rapport au fond 110, débouchant latéralement et définissant des parois horizontales (non référencées). Des câbles électriques 112, 114 traversent les parois horizontales du carter secondaire 104 afin d'être reliés chacun à un des câbles de puissance de l'ensemble accumulateur.

La paroi verticale 116 du carter secondaire 104 comporte un passage ou ouverture traversante (non référencée) au travers de laquelle s'étend en saillie à l'extérieur le connecteur 35 pour permettre de brancher directement une carte de circuit imprimé 118. Le connecteur 35 est fixé sur le carter secondaire 104 par l'intermédiaire d'équerres 120 vissées d'une part sur ledit carter et d'autre part sur le corps du connecteur.

Pour réaliser le montage de l'ensemble accumulateur 10 à l'intérieur du boîtier 100, il convient dans un premier temps d'engager les éléments accumulateurs 12 à l'intérieur du carter principal 102, puis d'encliqueter sur celui-ci le carter secondaire 104 par coopération des languettes 106 et des bossages 108. Cette dernière opération est facilitée par le caractère déformable de la patte 65 de fixation du support 67 de connecteur.

En effet, lors de la mise en place du carter secondaire 104 sur le carter principal 102, il est possible de déformer la patte 65 élastique de façon à permettre le déplacement du connecteur 35 par rapport à l'embase 64 de montage, et plus généralement par rapport à l'empilage d'électrodes de connexion des éléments accumulateurs 12 et d'entretoises 22, 24. Ainsi, on peut faciliter l'introduction du connecteur 35 à l'intérieur de l'ouverture traversante associée ménagée sur la paroi latérale 116 du carter secondaire 104 avant d'assurer l'encliquetage dudit carter sur le carter principal 102.

Compte tenu de la configuration des portions 65a à 65d de la patte de fixation, lors d'une pression exercée sur la patte 65 et/ou sur le connecteur 35, la partie de fixation 65e supportant le connecteur 35 peut se déplacer par déformation élastique selon une pluralité de directions par rapport aux éléments accumulateurs 12.

En outre, le montage élastique du connecteur 35 par la patte 65 facilite également la mise en place des équerres 120 et leur vissage sur le carter secondaire 104 et sur le connecteur 35. En effet, lors de cet accouplement du connecteur 35 sur le boîtier 100, il peut être légèrement déplacé dans l'ouverture traversante ménagée dans la paroi latérale 116 du carter secondaire 104. Après solidarisation du connecteur 35 et du boîtier 100, la patte 65 peut rester dans une position légèrement déformée sans risque de détérioration.

De manière à permettre une déformation élastique de la patte 65 de fixation, le support 67 de connecteur est avantageusement réalisé en une seule pièce par moulage d'une matière synthétique déformable telle que du polypropylène (PP) ou du polyéthylène (PE).

Dans l'exemple de réalisation illustré, le support 67 pour le connecteur est formé par une partie du flasque d'extrémité 52 inférieur. Dans une variante de réalisation, si le carter secondaire 104 du boîtier 100 présente une forme extérieure différente, il est possible d'utiliser la plaque d'appui 56 du flasque d'extrémité 50 supérieur pour réaliser le support du connecteur.

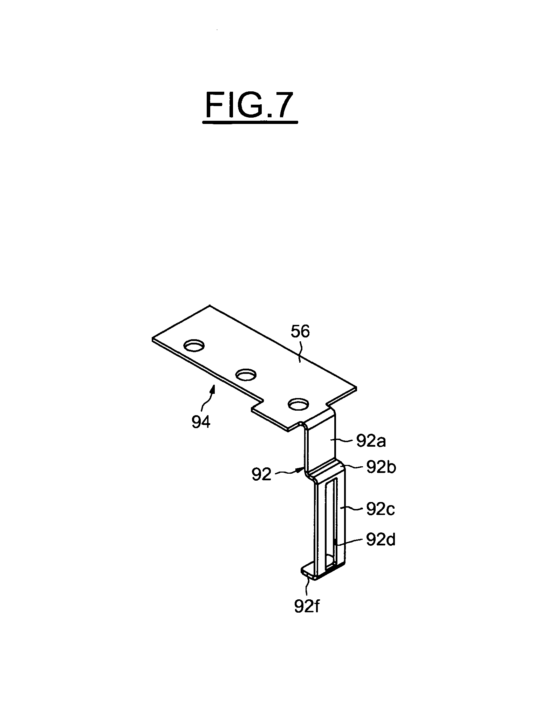

Dans ce but, comme illustrée à la figure 7 sur laquelle les éléments identiques portent les mêmes références, la plaque d'appui 56 comporte une patte 92 prévue pour la fixation du connecteur et s'étendant à partir du bord latéral extérieur opposé à l'autre plaque d'appui 58 (figures 1 et 2) du flasque d'extrémité 50 supérieur. La plaque d'appui 56 et la patte 92 forment un support 94 de connecteur.

La patte 92 comporte une première portion rectiligne 92a s'étendant à partir du bord latéral extérieur de la plaque d'appui 56 axialement vers le bas, en considérant l'axe d'empilage des éléments accumulateurs. L'extrémité inférieure de la portion rectiligne 92a est prolongée vers l'extérieur par une portion coudée 92b formant un pli s'étendant transversalement à ladite portion rectiligne. La portion coudée 92b est prolongée axialement vers le bas par une partie de fixation 92c rectiligne orientée de façon à ce que sa face principale s'étende transversalement à la plaque d'appui 56 formant embase. Un évidement traversant 92d est ménagé sur la partie de fixation 92c pour permettre le montage et la fixation du corps du connecteur. L'extrémité inférieure de la partie de fixation 92c est prolongée vers l'intérieur par un rebord 92f pouvant former butée. Dans cette variante de réalisation, la patte 92 est déformable selon deux directions perpendiculaires. Dans une autre variante, il pourrait être encore possible de prévoir une patte rapportée sur la plaque d'appui et montée à rotation sur ladite plaque de manière à pouvoir se déplacer par rapport à la plaque d'appui lors d'une sollicitation extérieure.

Dans les deux exemples de réalisation illustrés, le support de connecteur est formé par un des flasques d'extrémité. Dans une variante de réalisation, il pourrait être possible d'utiliser une des entretoises 24 isolantes pour former le support de connecteur. Dans ce cas, il conviendrait de prévoir sur l'entretoise 24 une patte de fixation déformable s'étendant à partir de sa base 32 d'une façon analogue aux exemples de réalisation illustrés. Alternativement, il est également possible de prévoir une pièce spécifiquement prévue pour supporter le connecteur, i.e. distincte des flasques 50, 52 d'extrémité et des entretoises 24, et montée dans l'empilement enserré axialement par les flasques d'extrémités 50, 52.

Par ailleurs, l'orientation de la patte de fixation du support de connecteur relativement à l'embase pourrait également être modifiée en fonction de l'emplacement de l'ouverture associée au connecteur sur le boîtier associé.

Dans l'exemple de réalisation de l'ensemble 10 illustré aux figures 1 et 2, l'électrode 20 négative de l'élément accumulateur 12 supérieur vient directement en contact avec l'électrode 18 positive de l'élément accumulateur inférieur adjacent. Pour les autres électrodes 18, 20 de connexion axialement superposées, une entretoise conductrice ou isolante est interposée entre deux électrodes immédiatement successives. Il pourrait toutefois être possible, sans sortir du cadre de la présente invention, de prévoir un contact axial direct entre d'autres électrodes positives et négatives axialement adjacentes en prévoyant un agencement adapté des entretoises pour conserver la connexion électrique souhaitée des éléments accumulateurs 12.

## Revendications

1. Ensemble accumulateur comprenant une pluralité d'éléments accumulateurs (12) d'énergie électrique comprenant chacun des électrodes (18, 20) de connexion, des moyens d'assemblage (22, 24, 50, 52, 54) reliant lesdites électrodes, et un connecteur (35) pour le branchement d'un composant extérieur à l'ensemble, **caractérisé en ce qu'**il comprend en outre un support (67) de connecteur comprenant une embase de montage (64) portée par les moyens d'assemblage et une patte de fixation (65) supportant le connecteur et conformée de manière à permettre un déplacement du connecteur relativement à l'embase de montage lors d'une sollicitation extérieure exercée sur ledit connecteur et/ou sur la patte de fixation.

2. Ensemble selon la revendication 1, dans lequel la patte de fixation (65) est déformable élastiquement selon au moins une direction.

3. Ensemble selon les revendications 1 ou 2, dans lequel la patte de fixation (65) comprend une partie de raccordement (65a à 65d) s'étendant à partir de l'embase de montage et une partie de fixation (65e) prolongeant ladite partie de raccordement et supportant le connecteur.

4. Ensemble selon la revendication 3, dans lequel la partie de raccordement comporte au moins une portion coudée (65b, 65d).

5. Ensemble selon les revendications 3 ou 4, dans lequel la partie de fixation (65e) s'étend transversalement par rapport à l'embase de montage.

6. Ensemble selon l'une quelconque des revendications 3 à 5, dans lequel les éléments accumulateurs (12) sont superposés selon un axe d'empilage, la partie de fixation (65e) s'étendant le long de l'axe d'empilage.

7. Ensemble selon l'une quelconque des revendications précédentes, dans lequel le support (67) de connecteur est réalisé monobloc.

8. Ensemble selon l'une quelconque des revendications précédentes, dans lequel les moyens d'assemblage comprennent des entretoises (22, 24) disposées axialement entre au moins certaines des électrodes de connexion des éléments accumulateurs, des tirants (54) s'étendant axialement à travers des évidements des électrodes de connexion et des entretoises, et des flasques d'extrémité (50, 52) coopérant avec les tirants pour enserrer axialement les électrodes de connexion et les entretoises empilées.

9. Ensemble selon la revendication 8, dans lequel au moins une partie d'un des flasques d'extrémité ou une entretoise (24) isolante électriquement forme l'embase de montage (64).

10. Ensemble selon les revendications 8 ou 9, comprenant des entretoises (22) électriquement conductrices et des fiches de connexion montées chacune à l'intérieur d'un évidement (30) de l'entretoise conductrice associée et reliées chacune à un câble électrique (31) propre, les câbles électriques étant fixés au connecteur (35).

11. Bloc accumulateur comprenant un ensemble accumulateur (10) selon l'une quelconque des revendications précédentes et un boîtier (100) délimitant une chambre de réception dudit ensemble, ledit boîtier comprenant un carter principal (102) et un carter secondaire (104) présentant des bords périphériques d'assemblage et étant pourvus de moyens de liaison en position assemblée, un desdits carters comprenant une ouverture ménagée dans une de ses parois (116) et au travers de laquelle s'étend en saillie vers l'extérieur le connecteur (35).

## Patentansprüche

1. Speichereinheit, die eine Vielzahl von Speicherelementen (12) elektrischer Energie enthält, die je Verbindungselektroden (18, 20), die Elektroden verbindende Montageeinrichtungen (22, 24, 50, 52, 54) und einen Verbinder (35) für den Anschluss eines Bauteils außerhalb der Einheit enthalten, **dadurch gekennzeichnet, dass** sie außerdem einen Verbinderträger (67) enthält, der einen von den Montageeinrichtungen getragenen Einbausockel (64) und eine Befestigungslasche (65) enthält, die den Verbinder trägt und so gestaltet ist, dass sie eine Verschiebung des Verbinders bezüglich des Einbausockels bei einer auf den Verbinder und/oder auf die Befestigungslasche ausgeübten äußeren Beanspruchung ermöglicht.

2. Einheit nach Anspruch 1, wobei die Befestigungslasche (65) gemäß mindestens einer Richtung elastisch verformbar ist.

3. Einheit nach den Ansprüchen 1 oder 2, wobei die Befestigungslasche (65) einen Anschlussteil (65a bis 65d), der sich ausgehend vom Einbausockel erstreckt, und einen Befestigungsteil (65e) enthält, der den Anschlussteil verlängert und den Verbinder trägt.

4. Einheit nach Anspruch 3, wobei der Anschlussteil mindestens einen gekrümmten Abschnitt (65b, 65d) enthält.

5. Einheit nach den Ansprüchen 3 oder 4, wobei der Befestigungsteil (65e) sich bezüglich des Einbausockels quer erstreckt.

6. Einheit nach einem der Ansprüche 3 bis 5, wobei die Speicherelemente (12) gemäß einer Stapelachse übereinander angeordnet sind, wobei der Befestigungsteil (65e) sich entlang der Stapelachse erstreckt.

7. Einheit nach einem der vorhergehenden Ansprüche, wobei der Verbinderträger (67) einstückig hergestellt ist.

8. Einheit nach einem der vorhergehenden Ansprüche, wobei die Montageeinrichtungen Abstandshalter (22, 24), die axial zwischen mindestens bestimmten der Verbindungselektroden der Speicherelemente angeordnet sind, Zuganker (54), die sich axial durch Aussparungen der Verbindungselektroden und der Abstandshalter erstrecken, und Endflansche (50, 52) enthalten, die mit den Zugankern zusammenwirken, um die Verbindungselektroden und die gestapelten Abstandshalter axial einzuspannen.

9. Einheit nach Anspruch 8, wobei mindestens ein Teil der Endflansche oder ein elektrisch isolierender Abstandshalter (24) den Einbausockel (64) formt.

10. Einheit nach den Ansprüche 8 oder 9, die elektrisch leitende Abstandshalter (22) und Anschlussstifte enthält, die je innerhalb einer Aussparung (30) des zugeordneten leitenden Abstandshalters montiert und je mit einem eigenen elektrischen Kabel (31) verbunden sind, wobei die elektrischen Kabel am Verbinder (35) befestigt sind.

11. Speicherblock, der eine Speichereinheit (10) nach einem der vorhergehenden Ansprüche und ein Gehäuse (100) enthält, das eine Aufnahmekammer der Einheit begrenzt, wobei das Gehäuse einen Hauptkasten (102) und einen Sekundärkasten (104) enthält, die Montageumfangsränder aufweisen und mit Verbindungseinrichtungen in der montierten Stellung versehen sind, wobei einer der Kästen eine in einer seiner Wände (116) ausgesparte Öffnung enthält, durch die hindurch sich der Verbinder (35) nach außen vorstehend erstreckt.

## Claims

1. Accumulator assembly comprising a plurality of electrical energy accumulator elements (12) each comprising connecting electrodes (18, 20), assembly means (22, 24, 50, 52, 54) linking said electrodes, and a connector (35) for connecting an external component to the assembly, **characterized in that** it also comprises a connector support (67) comprising a mounting base (64) borne by the assembly means and a fixing lug (65) supporting the connector and configured in such a way as to allow a movement of the connector relative to the mounting base in response to an external stress exerted on said connector and/or on the fixing lug.

2. Assembly according to Claim 1, in which the fixing lug (65) is elastically deformable in at least one direction.

3. Assembly according to Claims 1 and 2, in which the fixing lug (65) comprises a connecting part (65a, to 65d) extending from the mounting base and a fixing part (65e) in extension of said connecting part and supporting the connector.

4. Assembly according to Claim 3, in which the connecting part comprises at least one bent portion (65b, 65d).

5. Assembly according to Claims 3 and 4, in which the fixing part (65e) extends transversally relative to the mounting base.

6. Assembly according to any one of Claims 3 to 5, in which the accumulator elements (12) are superposed on a stacking axis, the fixing part (65e) extending along the stacking axis.

7. Assembly according to any one of the preceding claims, in which the connector support (67) is made of a single piece.

8. Assembly according to any one of the preceding claims, in which the assembly means comprise spacers (22, 24) arranged axially between at least some of the connecting electrodes of the accumulator elements, tie-rods (54) extending axially through voids in the connecting electrodes and the spacers, and end flanges (50, 52) cooperating with the tie-rods to axially clamp the connecting electrodes and the stacked spacers.

9. Assembly according to Claim 8, in which at least a part of one of the end flanges or an electrically insulating spacer (24) forms the mounting base (64).

10. Assembly according to Claims 8 and 9, comprising electrically conductive spacers (22) and connecting plugs each mounted inside a void (30) of the associated conductive spacer and each linked to a specific electric cable (31), the electric cables being fixed to the connector (35).

11. Accumulator block comprising an accumulator assembly (10) according to any one of the preceding claims and a housing (100) delimiting a chamber accommodating said assembly, said housing comprising a main casing (102) and a secondary casing (104) having peripheral assembly edges and being provided with link means in the assembled position, one of said casings comprising an opening formed in one of its walls (116) and through which the connector (35) extends, protruding outwards.
